# EUROPEAN PATENT APPLICATION

(11) **EP 4 123 885 A1**
(43) Date of publication of application: **25.01.2023**
(21) Application number: 22382692.6
(22) Date of filing: 19.07.2022
(51) Int. Cl.: H02K 3/52, H02K 15/095

(54) **FLANGE FOR AUTOMATIC NEEDLE WINDING IN ELECTRIC MOTORS STATORS AND ASSOCIATED WINDING PROCEDURE**

(30) Priority: 20.07.2021 ES 202130690
(71) Applicant: ORONA S. COOP., 20120 Hernani (Guipúzcoa) (ES)
(72) Inventor: ELIZEGI BELOKI, Xabier, 20120 HERNANI (Guipúzcoa) (ES); KORTABARRIA ELGUERO, Jon Ander, 20120 HERNANI (Guipúzcoa) (ES); RUANO SANZ, Mikel, 20120 HERNANI (Guipúzcoa) (ES)
(74) Representative: Herrero & Asociados, S.L.

(57) **Abstract**

Flange for automatic needle winding in electric motor stators and associated winding procedure. The flange is made up of an annular body with winding projections (1), inlet through-openings (2), outlet through-openings (3), and paths (4) for carrying, guiding and housing the electric wires in their passage from the outlet through-opening (3) of one projection (1) to the inlet through-opening (2) of another projection (1). The flange additionally comprises grooves (5) located in correspondence with the inlet through-openings (2), for guiding and housing the initial end of the electrical wire in its introduction into the interior space through the corresponding inlet through-opening (2), to avoid interference in the process of winding the wire on the projection (1).

## Description

### OBJECT OF THE INVENTION

The present invention falls within the technical field of the details of windings in electrical machines, more specifically in that of the stator windings fixing in multipolar magnet motors, as well as in the mechanisms for actuating lifting devices, and relates in particular to a flange designed to allow automatic needle winding in electric motors stators, especially for the case of electric motors used in lifting devices.

The invention also relates to an automatic winding method that makes use of said flange, to an electric motor comprising a stator which in turn comprises said flange, and to a lifting device comprising said electric motor.

### BACKGROUND OF THE INVENTION

Lifting devices can be powered by electric motors, which provide the energy needed to move a car along an elevator shaft. An electric motor typically includes a rotor mounted on a rotating shaft and a stationary stator configured to interact with the rotor.

In a configuration where the rotor is equipped with permanent magnets, the stator comprises a plurality of electrical windings. In the event that said windings are made automatically by means of specific devices, these are formed in winding flanges that facilitate routing and isolation of said windings.

In order to improve the performance of the devices, it is necessary to obtain a compact winding with a filling factor as high as possible. The filling factor is understood as the relationship between the physical space occupied by the copper wires inside the groove and the total physical space inside the groove itself.

On the other hand, the aforementioned techniques for winding stators automatically and by means of devices equipped with a winding needle, known generically as needle winding, are known, which, among other advantages, avoid having to make additional welds between the different coils of each phase, thus simplifying the electrical connections within the motor. In this way, the winding is carried out directly on the winding flange, which comprises:
- a plurality of winding cores, known as protrusions or teeth, which support the coil of copper wire,
- a corresponding plurality of grooves located between the winding cores, through which the copper wire enters and exits at a tooth, and
- grooves, referred to from now on as paths, through which the wire is led from one tooth to the next one.

The winding technique described requires a certain space in the grooves to be able to insert the needle. If this space is not respected, the needle could rub against the copper wire, damaging the insulation and causing short circuits or premature deterioration of the motor. Likewise, in the event that a wire is placed in an incorrect position, a pile of wires could be generated that would invade the space reserved for the needle, which could cause breakages in the copper.

It is necessary to mention at this point that the most used electric motors in lifting devices are the Gearless type (without gear), which consist of a synchronous motor equipped with permanent magnets that do not have a gearbox, which helps to have fewer friction points and achieves significant energy savings. These motors increase the energy efficiency of elevators and allow the elimination of machine rooms.

These motors used in elevation tend to have large dimensions and require compact stators with windings made up of wires with large diameter dimensions, which makes them poorly moldable and hinders precision at the forming time. This increase in wire sizes and diameters makes designs increasingly demanding in terms of features such as the filling factor or the need to control each wire, especially in applications where efficiency plays an important role, so there arises the need to optimize the design of the winding flanges to be able to perform winding with a needle.

Likewise, in order to optimize the performance of the motor given the high diameter dimensions of the wires, it is necessary to increase the length of the winding package, thereby increasing the cost per volume of material.

It is known that there are problems of lack of control in the winding process, basically derived from an incorrect entry of the wire into the groove, which causes an unintentional invasion of space in the groove.

Some patent documents relating to flanges for automatic stator winding are known in the current state of the art. For example, European patent publication number EP3651320 describes a winding flange configured to support the windings of an electric motor, comprising a cylindrical wall extending around a central axis. The cylindrical wall includes a plurality of grooves formed along the circumference of the cylindrical wall, each groove having a constant width along the circumference; and a plurality of openings having different heights. Each opening extends from an end surface of the cylindrical wall and allows a wire to pass between an outer area outside the cylindrical wall and an inner space defined by the cylindrical wall.

This patent describes a flange with a simple design that allows the passage of a single wire through each groove and opening.

European patent EP2457864 discloses an elevator actuating device having an electric motor designed for frequency converter operation and having a rotor and a stator. A coil end disk is provided to separate the phases of the electromotor from each other. The flange also separates the inlets and outlets of the coils of each phase of the electromotor from each other.

This patent describes a flange provided with a kind of ramps to allow the change in the height of the wire during the winding process.

Another example can be found in the US patent under publication number US2018183290, which describes in this case a stator arrangement for a three-phase electric generator, comprising a plurality of stator teeth, a contact device that is arranged in an end part of the stator, and a continuous winding wire which is wound in each case around the individual stator teeth in order to form stator tooth windings. A connecting element is provided on a contact device and is designed to electrically connect parts of the winding wire provided on the contact device to form a star point. The present invention further provides an electrical three-phase generator and a method for producing a stator arrangement.

Finally, patent under publication number EP3687043 describes an insulator, a stator comprising said insulator and a motor comprising said stator. The insulator includes a part to be wound with a coil, a first flange and a second flange. The first flange is formed on the side of the part closest to a core segment and includes a coil guide groove that guides the coil into the part. The second flange is formed on the side closest to the distal end of a tooth. The coil guide groove includes a first groove extending at an acute angle θ from an inner surface of the first flange.

In accordance with what is described in this document, an angle is provided with respect to the inlet through-opening of the flange so that the wire is placed directly on the top of the tooth already in an orderly manner. Likewise, several details of the inlet are added, such as projections to hold the wire and that it does not move during winding or a second angle to direct the wire with greater precision.

None of the documents of the current state of the art describes flanges provided with elements that facilitate an orderly arrangement of the copper wires during the automatic forming procedures of the coils by means of a needle, in order to optimize the filling factor.

Therefore, there is a need to have a flange for automatic needle winding in stators of large electric motors, such as Gearless motors used in lifting devices, which avoid the aforementioned problems.

### DESCRIPTION OF THE INVENTION

A first object of the invention consists of a flange for carrying out automatic needle winding in electric motor stator. Said flange is made up of an annular body with a cylindrical perimeter wall comprising a plurality of winding supports that project from an internal face of the wall in a radial direction towards the internal central axis. The wall has a toothed upper sector, with a plurality of inlet and outlet through-openings, through which copper electric wires pass from the outside to the cylindrical interior space, and vice versa. The copper wires are wound on the winding supports to form the stator coils.

In correspondence with each inlet through-opening, the flange additionally comprises grooves intended to house the initial end of the wire in its first introduction through the corresponding through-opening, thus preventing said end from interfering with subsequent passages of the wire during coil forming. In this way the problems described above are overcome.

A second object of the invention consists of a stator provided with the previously described flange for automatic winding.

A third object of the invention consists of an automatic winding process, carried out on the previously described stator and using an automatic device provided with a winding needle.

A fourth and last object of the invention consists of a lifting device comprising an electric motor provided with the previously described stator.

### DESCRIPTION OF THE DRAWINGS

In order to complement the description that is being made and to help a better understanding of the features of the invention, according to a preferred example of its practical embodiment, a set of drawings is attached as an integral part of said description wherein, with an illustrative and non-limiting nature, the following has been represented:
Figure 1.- Shows a perspective view of the flange for automatic winding.
Figure 2.- Shows a detailed view of the flange, in which the inlet and outlet openings and the grooves can be seen.
Figure 3.- Shows a top plan view of the flange.
Figure 4.- Shows a lower plan view of the flange.
Figure 5.- Shows a front view of the flange.
Figure 6.- Shows a perspective view of a stator with the flange for automatic winding, prior to winding.
Figure 7a.- Shows a view of a stator formed with the flange.
Figure 7b.- Shows a detail of the stator of the previous figure.

### PREFERRED EMBODIMENT OF THE INVENTION

Next, with the help of the aforementioned figures, a detailed explanation of a preferred embodiment of the object of the present invention is provided.

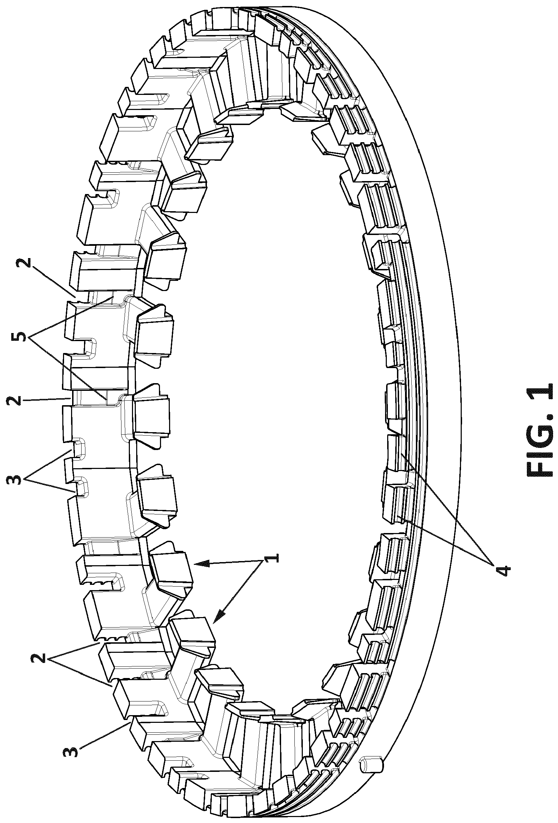

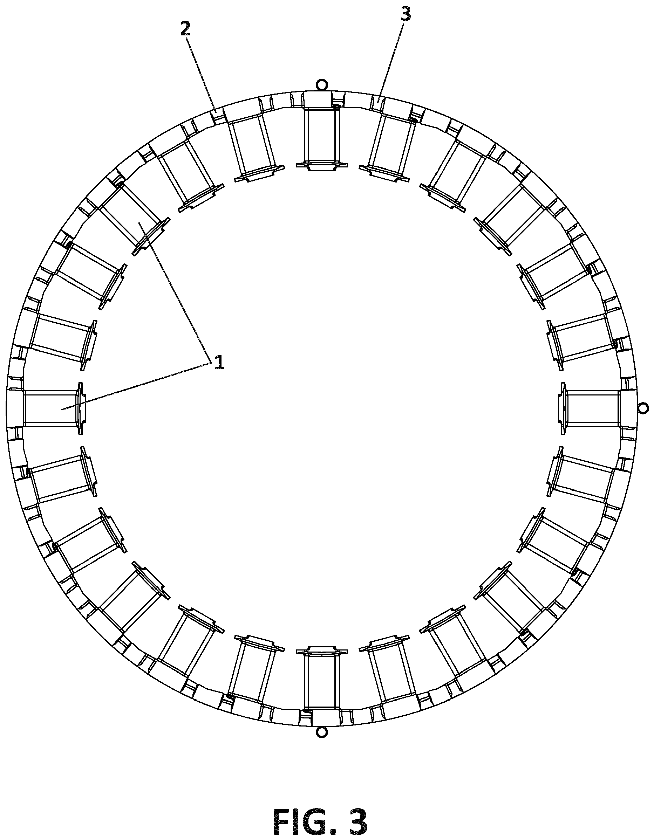

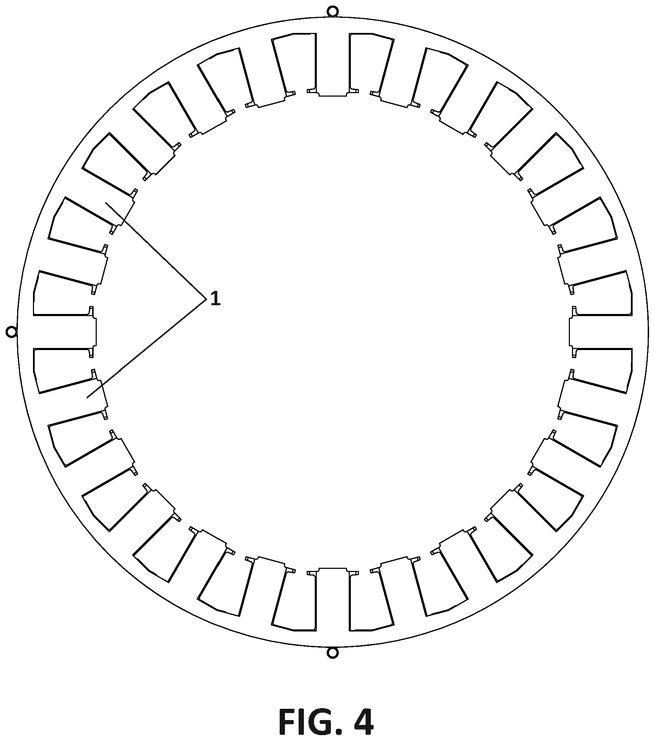

The flange for automatic needle winding in electric motor stators that is described, shown in figures 1-5, is made up of an annular body that has a perimeter cylindrical wall that is centered on an imaginary central axis that corresponds to the axis of rotation of an electric motor.

The cylindrical wall separates an internal cylindrical space that is peripherally limited by an internal face of said wall, from an external area external to the wall. A plurality of winding supports, hereinafter referred to as projections (1), project from the inner face of the wall in a radial direction towards the central axis. To form a stator, electrical copper wires are wound around the projections (1) forming electrical coils.

The wall has a toothed upper sector, with a plurality of through-openings through which the copper wires pass perpendicularly from the outside to the cylindrical interior space, and vice versa. Said through-openings are divided into inlet through-openings (2) and outlet through-openings (3). In the preferred embodiment shown herein, the flange has the same number of inlet through-openings (2) as outlet through-openings (3).

The inlet through-openings (2) are intended to allow the passage of the electrical wire from the outside to the interior space, to be wound on a projection (1). For their part, the outlet through-openings (3) are intended to allow the electrical wire to pass out from the interior space, more specifically from the winding formed on said projection (1).

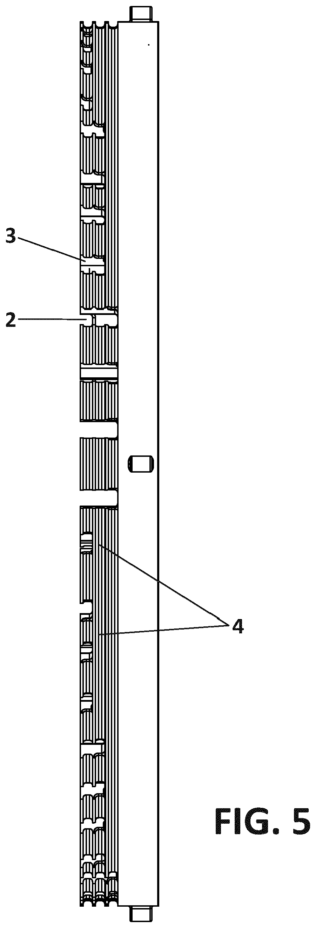

The external face of the wall shows, at its upper sector, a plurality of parallel transverse grooves, hereinafter referred to as paths (4), intended to conduct, guide and house in an orderly manner the plurality of electrical wires as they pass through the outside of the flange wall, from the outlet through-opening (3) of one projection (1) to the inlet through-opening (2) of another projection (1) as shown in figure 5.

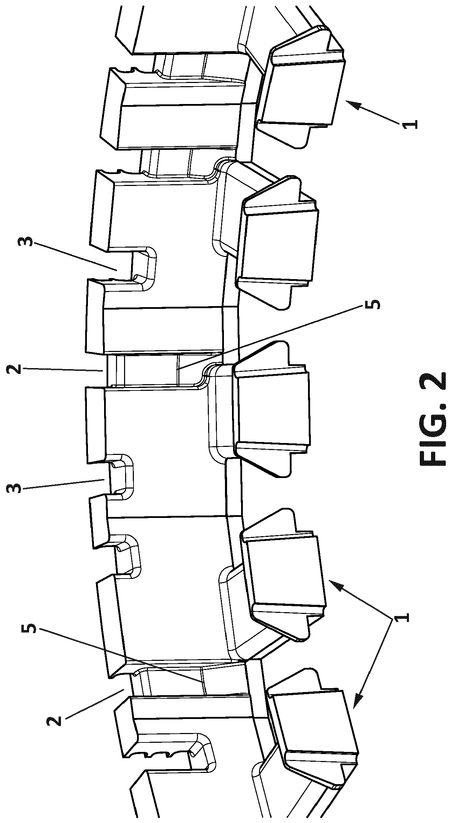

The wall additionally comprises grooves (5) located at the lower sector of said wall and in correspondence with the inlet through-openings (2), as illustrated in detail in figure 2, so that under each inlet through-opening (2) a corresponding groove (5) is located. In said detail it can be seen that the grooves (5) consist, in this preferred embodiment, of recesses made on the wall.

Each of the grooves (5) is intended to guide and house the initial end of the wire in its first introduction into the interior space through the corresponding inlet through-opening (2), in order to prevent it from interfering with the wire winding procedure on the projection (1).

The advantage achieved by inserting the wire in the corresponding groove (5) consists first of all in avoiding the additional occupation of a space necessary for an orderly and uniform wire stacking on the projection (1) in the formation of the coil, thus achieving an adequate filling factor. Secondly, it prevents interference with the winding needle during the automated process of generating the coils, thus eliminating possible contacts and wired breakage.

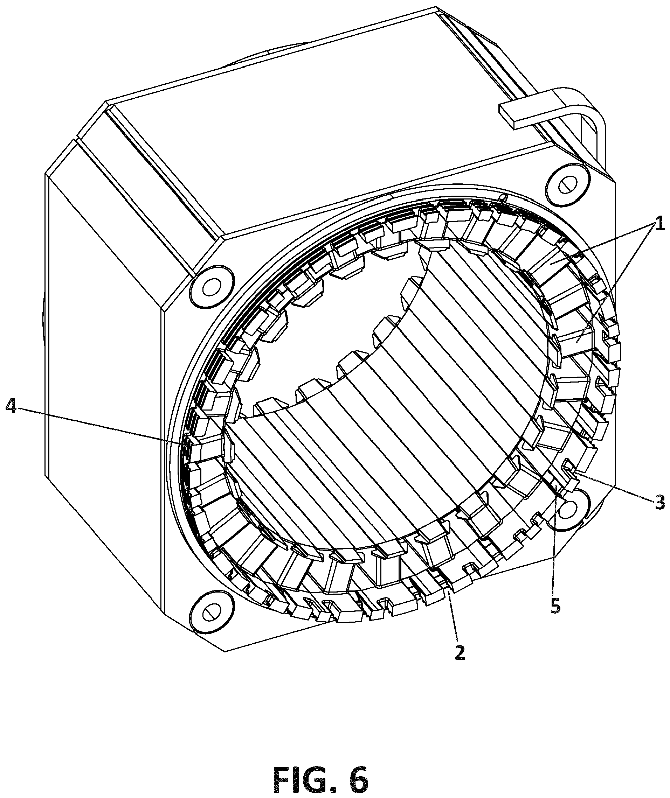

Figure 6 shows a stator provided with the previously described winding flange, in a state prior to carrying out the winding procedure.

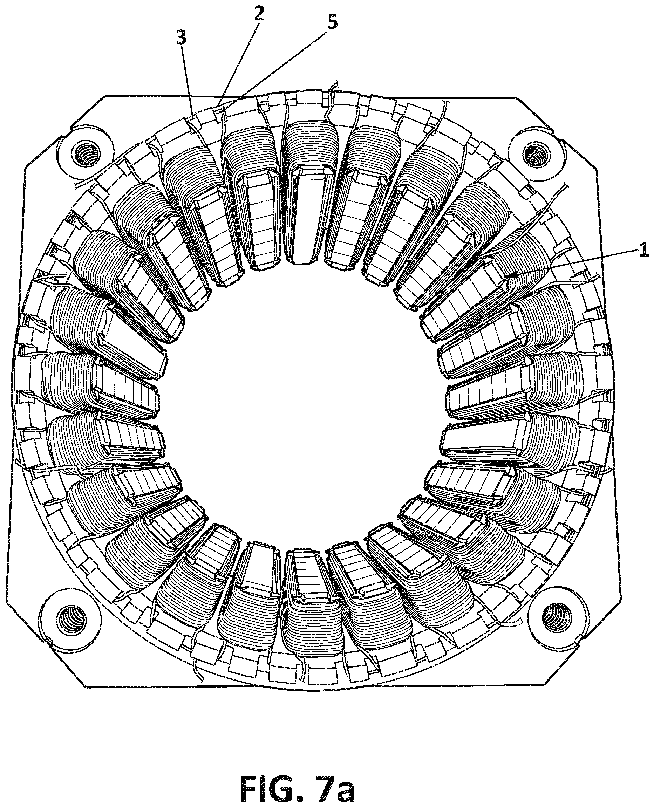

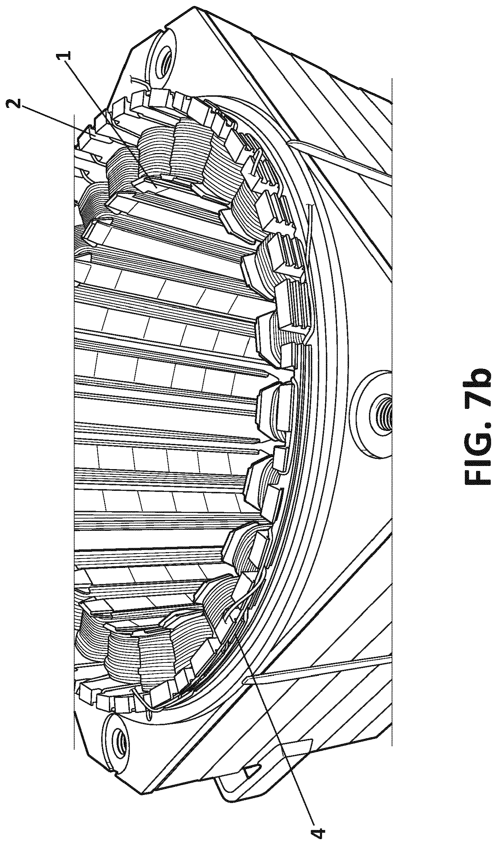

The automatic winding procedure for forming the electric motor stator is carried out in a specific device for this purpose, equipped with a winding needle and generically known as needle winding. Said procedure is carried out on the stator of figure 6 and gives rise to the stator shown in figures 7a and 7b.

This procedure comprises the following actuating sequence:
- introducing the winding needle, loaded with the electric wire, from the outside of the flange and through an inlet through-opening (2), perpendicularly to said inlet through-opening (2);
- inserting the needle with the electrical wire inside the groove (5), for housing the end of the wire inside said groove (5);
- winding the wire on the corresponding projection (1);
- extracting the wire through an outlet through-opening (3); and
- introducing the wire inside a path (4) and guiding said wire to the next inlet through-opening (2).

## Claims

1. Flange for automatic needle winding in electric motor stators, made up of an annular body that has a cylindrical perimeter wall that separates a cylindrical interior space, peripherally limited by an internal face of said wall, from an external area external to the wall, wherein said flange comprises:
- a plurality of winding projections (1), projecting from the inner face of the wall in a radial direction, intended to act as a winding support for electrical copper wires for forming electrical coils;
- inlet through-openings (2), located at an upper sector of the wall, intended to allow the passage, in a perpendicular direction, of the electric wire from the outside to the inside space for its winding on a projection (1); and
- outlet through-openings (3), located at an upper sector of the wall, intended to allow the passage of the electric wire outwards from the winding formed on the projection (1);
the flange being **characterized in that** it additionally comprises grooves (5) located at the lower sector of the internal face of the wall and in correspondence with the inlet through-openings (2), for guiding and housing the initial end of the electrical wire in its introduction into the interior space through the corresponding inlet through-opening (2), to avoid interferences in the process of winding the wire on the projection (1).

2. Flange for automatic winding according to claim 1 wherein the grooves (5) consist of recesses made on the wall.

3. Flange for automatic winding according to any of the preceding claims, wherein the flange has the same number of inlet through-openings (2) as outlet through-openings (3).

4. Flange for automatic winding according to any of the preceding claims, wherein the flange additionally comprises paths (4) located at an upper sector of an external face of the wall for carrying, guiding and housing the electrical wires in their passage from the outlet through-opening (3) of one projection (1) to the inlet through-opening (2) of another projection (1).

5. Electric motor stator **characterized in that** it comprises a flange according to any one of claims 1-4.

6. Automatic winding procedure for forming the electric motor stator of claim 5, implemented in a device provided with a winding needle, **characterized in that** it comprises the following steps:
- introducing the winding needle, loaded with the electric wire, from the outside of the flange and through an inlet through-opening (2), perpendicularly to said inlet through-opening (2);
- inserting the needle with the electrical wire inside the groove (5), for housing the end of the wire inside said groove (5);
- winding the wire on the corresponding projection (1);
- extracting the wire through an outlet through-opening (3); and
- introducing the wire inside a path (4) and guiding said wire to the next inlet through-opening (2).

7. Electric motor comprising a stator according to claim 5.

8. Lifting device comprising an electric motor according to claim 7.
